# DEMANDE DE BREVET EUROPEEN

(11) **EP 4 178 105 A1**
(43) Date de publication de la demande: **10.05.2023**
(21) Numéro de dépôt: 22201562.0
(22) Date de dépôt: 14.10.2022
(51) Int. Cl.: H02S 20/30

(54) **AGENCEMENT D'ENTRAÎNEMENT DE TYPE CROIX DE MALTE ET SUIVEUR SOLAIRE COMPORTANT UN TEL AGENCEMENT**

(30) Priorité: 22.10.2021 FR 2111261
(71) Demandeur: Nexans, 92400 Courbevoie (FR)
(72) Inventeur: CHARTIER, Emilie, 13090 AIX EN PROVENCE (FR); AMAR, Jérémy, 13290 LES MILLES (FR); PRINTEMPS, Morgan, 13600 LA CIOTAT (FR); QUEVILLIER, Ludovic, 13400 AUBAGNE (FR); RICHARD, Aymeric, 1370 VENELLES (FR); GILLET, Lucas, 83640 SAINT ZACHARIE (FR); SOULIE, Emile, 13650 MEYRAGUES (FR)
(74) Mandataire: Ipsilon

(57) **Abrégé**

L'invention concerne un agencement d'entraînement comprenant un arbre d'entraînement (1) en rotation portant un doigt d'entraînement (10) parallèle et décalé dans la direction radiale à l'axe de rotation et un dispositif de blocage (11) décalé radialement par rapport au doigt (10) ; et une unité de couplage dont un dispositif en forme d'arc porte des évidements d'entraînement ou de blocage disposés alternativement de manière à permettre une rotation relative/ un blocage en rotation de l'unité et de l'arbre d'entraînement (1) lorsque le doigt (10) s'engage dans l'un des évidements d'entraînement/de blocage.

## Description

### Domaine technique

La présente invention concerne de manière générale un agencement d'entraînement de type croix de Malte, et son application particulière à un suiveur solaire.

L'invention concerne plus particulièrement un agencement d'entraînement de type croix de Malte comprenant :
- d'une part, un arbre d'entraînement selon un axe de rotation, ledit arbre d'entraînement portant à une première extrémité un doigt d'entraînement s'étendant parallèlement et décalé dans la direction radiale audit axe de rotation et un dispositif de blocage décalé dans la direction radiale par rapport au doigt d'entraînement; et
- d'autre part, une unité de couplage comportant un dispositif de couplage en forme d'arc, le dispositif de couplage portant des évidements d'entraînement et des évidements de blocage disposés alternativement dans le sens de la circonférence de la forme d'arc,
   ledit agencement d'entraînement permettant une rotation relative de l'unité de couplage et de l'arbre d'entraînement lorsque le doigt d'entraînement s'engage dans l'un des évidements d'entraînement, et un blocage de la rotation relative lorsque le dispositif de blocage est engagé dans l'un des évidements de blocage.

### Arrière-plan technologique

Un tel agencement d'entraînement est connu, notamment du document US2021058025, et y est utilisé dans un suiveur solaire pour entraîner en rotation autour d'un axe de pivotement un dispositif mobile solidaire en rotation d'une pluralité d'unités pivotantes, chacune comportant un arceau s'étendant dans un plan perpendiculaire à l'axe de pivotement, le dispositif mobile comportant des rails de montage interconnectant les unités pivotantes et servant de fixation pour des panneaux solaires dans un même plan. Chaque unité pivotante comporte également un élément de support fixe immobilisé sur un poteau ancré au sol. Les unités pivotantes sont également interconnectées deux à deux via des arbres d'entraînement entraînés en rotation par un moteur d'entraînement disposé sur l'élément de support fixe de l'une des unités pivotantes. Chaque arbre d'entraînement constitue un arbre d'entraînement d'un agencement de type à croix de Malte, portant à au moins une extrémité, le doigt d'entraînement et le dispositif de blocage précités, alors que chaque unité pivotante constitue l'unité de couplage précitée de l'agencement de type à croix de Malte, dont l'arceau porte, sur son profil extérieur convexe, une alternance d'évidements d'entraînement et d'évidements de blocage. L'arceau porte donc ici le dispositif de couplage précité de l'agencement d'entraînement de type croix de Malte. Lorsque le doigt d'entraînement s'engage dans les évidements d'entraînement, l'arceau d'entraînement, et par suite les rails et panneaux solaires qui lui sont reliés, sont entraînés en rotation. Si le dispositif de blocage s'engage dans les évidements de blocage, l'arceau d'entraînement, et par suite les rails et panneaux solaires qui lui sont reliés, sont bloqués en rotation. Un intérêt du suiveur solaire de ce document est qu'il est possible de faire pivoter pas à pas, grâce à un unique moteur, l'ensemble des panneaux solaires reliés aux unités pivotantes, pour aligner les panneaux solaires avec le soleil. Néanmoins, un inconvénient principal de ce suiveur solaire est qu'il nécessite un nombre important de poteaux ancrés au sol pour pouvoir supporter le poids d'un dispositif mobile de grande dimension. En effet, le poids du dispositif mobile (rails et panneaux solaires) est supporté uniquement par les éléments de support fixes immobilisés sur les poteaux ancrés au sol. En outre, l'arceau utilisé dans chaque unité pivotante n'ayant qu'une fonction d'entraînement, il est nécessaire de prévoir autant d'unités pivotantes qu'il y a de poteau d'ancrage au sol.

On connait par ailleurs du document EP 3 501 098 B1 une autre structure de suiveur solaire dans lequel le dispositif mobile comporte une structure de support en treillis rigide qui s'étend longitudinalement selon l'axe de pivotement du dispositif mobile, et sur laquelle est fixée une pluralité de panneaux solaires dans un même plan. Dans un mode de réalisation préféré, la structure de support en treillis rigide est fixée uniquement sur deux extrémités de deux arceaux qui s'étendent dans un plan perpendiculaire à l'axe de pivotement, de sorte que les deux arceaux constituent deux uniques supports pour la structure de support en treillis rigide. Chacun des deux arceaux repose en en outre sur un berceau de guidage en rotation de l'arceau correspondant, et chaque berceau de guidage est fixé en partie supérieure d'un premier appui au sol. Le poids du dispositif mobile est ainsi distribué sur seulement deux appuis au sol, via les deux arceaux de support. L'axe de sortie d'un moteur d'entraînement fixé sur l'un des deux berceaux porte un pignon qui engraine directement ou indirectement avec un profil complémentaire porté par un arc de roue dentée solidaire de l'arceau correspondant, porté de préférence par une face externe de l'arceau tournée vers le sol (en d'autres termes, par la partie convexe de l'arceau. Avec une telle structure, on peut obtenir avantageusement des suiveurs solaires de grande dimension (typiquement une structure de support en treillis rigide pouvant s'étendre jusqu'à 55 mètres en longueur et 5 mètres en largeur, avec seulement deux arceaux de support d'environ 1 mètre de diamètre séparés d'environ la moitié de la longueur totale de la structure, et deux appuis au sol. En revanche, le moteur n'agit que sur l'un des deux arceaux alors qu'il serait souhaitable de mieux distribuer les efforts en permettant au moteur d'agir simultanément sur les deux arceaux de support.

Adapter la solution d'entraînement à moteur unique décrite dans le document US2021058025 au suiveur solaire décrit dans le document EP 3 501 098 B1 serait mécaniquement impossible car les niveaux d'efforts subis par le doigt d'entraînement et les évidements d'entraînement de l'agencement d'entraînement à croix de Malte décrit dans le document US2021058025 seraient beaucoup trop importants. Par ailleurs, dans le cas d'un suiveur solaire de grande dimension, compte-tenu de la distance importante séparant les deux arceaux de support et de leur large diamètre, un moteur unique d'entraînement subirait beaucoup trop d'effort de torsion. Il serait nécessaire en outre de rajouter des appuis au sol, ce qui n'est pas souhaitable en termes de coûts.

### Résumé de l'invention

La présente invention propose de pallier au moins certains inconvénients de l'art antérieur.

Un premier objectif de la présente invention est de proposer un nouvel agencement d'entraînement de type croix de Malte qui permette de mieux répartir les efforts mécaniques subis.

Cet objectif est atteint selon la présente invention qui a pour objet un agencement d'entraînement de type croix de Malte comprenant :
- d'une part, un arbre d'entraînement selon un axe de rotation, ledit arbre d'entraînement portant à une première extrémité un doigt d'entraînement s'étendant parallèlement et décalé dans la direction radiale audit axe de rotation et un dispositif de blocage décalé dans la direction radiale par rapport au doigt d'entraînement ; et
- d'autre part, une unité de couplage comportant un dispositif de couplage en forme d'arc, le dispositif de couplage portant des évidements d'entraînement et des évidements de blocage disposés alternativement dans le sens de la circonférence de la forme d'arc,
   ledit agencement d'entraînement permettant une rotation relative de l'unité de couplage et de l'arbre d'entraînement lorsque le doigt d'entraînement s'engage dans l'un des évidements d'entraînement, et un blocage de la rotation relative lorsque le dispositif de blocage est engagé dans l'un des évidements de blocage,
   caractérisé en ce que le dispositif de blocage et le doigt d'entraînement sont décalés dans la direction longitudinale de l'axe de rotation et en ce que le dispositif de couplage comporte une première pièce en forme d'arc portant les évidements de blocage et une deuxième pièce en forme d'arc portant les évidements d'entraînement, la première pièce et la deuxième pièce en forme d'arc étant positionnées parallèlement et étant décalées dans la direction longitudinale de l'axe de rotation de manière à pouvoir coopérer avec le dispositif de blocage, respectivement le doigt d'entraînement.

Le fait de séparer la fonction de blocage et la fonction d'entraînement et de les répartir le long de l'axe de rotation de l'arbre d'entraînement permet de mieux répartir les efforts.

Selon une réalisation possible, le doigt d'entraînement est de forme sensiblement cylindrique, avec deux méplats diamétralement opposés, et est monté libre en rotation autour de son axe.

Selon une réalisation possible, le doigt d'entraînement est monté sur un disque fixé coaxialement à ladite extrémité de l'arbre d'entraînement.

Selon une réalisation possible, le dispositif de blocage est un demi-cylindre coaxial à l'arbre d'entraînement.

L'agencement d'entraînement de type croix de Malte conforme à l'invention est en outre particulièrement intéressant dans le domaine d'application des suiveurs solaires.

Ainsi, l'invention concerne également un suiveur solaire comprenant :
- un dispositif mobile apte à pivoter autour d'un axe de pivotement et au moins un premier arceau solidaire en rotation du dispositif mobile et s'étendant dans un plan perpendiculaire à l'axe de pivotement ;
- un premier agencement d'entraînement de type croix de Malte l'invention, associé au premier arceau et positionné de manière à ce que l'axe de rotation de l'arbre d'entraînement du premier agencement d'entraînement soit colinéaire à l'axe de pivotement du dispositif mobile et à ce que l'entraînement en rotation de l'arbre d'entraînement provoque soit le pivotement du premier arceau et du dispositif mobile autour dudit axe de pivotement, soit le blocage du premier arceau et du dispositif mobile, selon les positions du dispositif de blocage et du doigt d'entraînement relativement respectivement aux évidements de blocage et aux évidements d'entraînement; et
- un système motorisé d'entraînement configuré pour entraîner en rotation l'arbre d'entraînement du premier agencement d'entraînement.

Dans un mode de réalisation possible, le suiveur solaire comporte :
- un deuxième arceau situé dans un plan parallèle au premier arceau et solidaire en rotation du dispositif mobile ; et
- un deuxième agencement d'entraînement selon l'invention, associé au deuxième arceau.

Dans un mode de réalisation possible, ledit système motorisé d'entraînement est configuré pour entraîner simultanément en rotation les arbres d'entraînement du premier agencement d'entraînement associé au premier arceau et du deuxième agencement d'entraînement associé au deuxième arceau.

Dans un mode de réalisation possible, le système motorisé d'entraînement comprend :
- un unique moteur placé entre le premier arceau et le deuxième arceau ;
- un arbre de transmission couplé au moteur et s'étendant longitudinalement selon l'axe de pivotement au moins jusqu'au premier arceau et au deuxième arceau ; et
- un système de couplage associé à chacun des premier et deuxième arceaux et configuré pour transmettre un mouvement de rotation de l'arbre de transmission simultanément aux arbres d'entraînement du premier agencement d'entraînement associé au premier arceau et du deuxième agencement d'entraînement associé au deuxième arceau.

Dans un mode de réalisation possible, le premier arceau porte l'unité de couplage du premier agencement d'entraînement, la première pièce en forme d'arc et la deuxième pièce en forme d'arc étant fixées audit premier arceau en suivant le profil du premier arceau, et l'axe de rotation de l'arbre d'entraînement du premier agencement d'entraînement est fixe par rapport à une structure d'appui au sol du suiveur solaire et s'étend parallèlement à l'axe de pivotement du dispositif mobile.

Dans un mode de réalisation possible, le suiveur solaire comporte en outre un premier berceau de guidage en rotation du premier arceau, fixé en partie supérieure d'une première structure d'appui au sol et sur lequel repose le premier arceau, l'arbre d'entraînement du premier agencement d'entraînement est monté libre en rotation sur une surface latérale du premier arceau de manière à s'étendre parallèlement à l'axe de pivotement du dispositif mobile, et l'unité de couplage du premier agencement d'entraînement est portée par le premier berceau de guidage en rotation.

Dans un mode de réalisation possible, le premier berceau de guidage en rotation comprend une paroi verticale latérale située en regard de la surface latérale du premier arceau, la première pièce en forme d'arc et la deuxième pièce en forme d'arc de l'unité de couplage étant fixées sur un profil en arc correspondant en partie supérieure de la paroi verticale latérale.

Dans un mode de réalisation possible, le suiveur solaire comporte un deuxième berceau de guidage en rotation du deuxième arceau, fixé en partie supérieure d'une deuxième structure d'appui au sol et sur lequel repose le deuxième arceau.

Dans un mode de réalisation possible, le dispositif mobile comporte une structure de support en treillis rigide s'étendant longitudinalement selon l'axe de pivotement et sur laquelle est fixée une pluralité de panneaux solaires dans un même plan, la structure de support en treillis rigide étant fixée uniquement aux extrémités du premier arceau et du deuxième arceau de sorte que lesdits premier et deuxième arceaux constituent deux uniques supports pour ladite structure en treillis rigide.

Dans ce cas, l'unique moteur peut être fixé à la structure de support en treillis rigide, l'arbre de transmission étant monté libre en rotation sur la structure de support en treillis rigide, au-dessus du premier agencement d'entraînement associé au premier arceau et du deuxième agencement d'entraînement au deuxième arceau; et le système de couplage associé à chacun des premier et deuxième arceaux comporte un premier pignon solidaire en rotation de l'arbre de transmission, un deuxième pignon solidaire en rotation de l'arbre d'entraînement du premier ou du deuxième agencement d'entraînement et monté coaxialement en amont du dispositif de blocage correspondant, et une chaine de transmission entre le premier pignon et le deuxième pignon.

Dans un mode de réalisation possible, chacun des premier et deuxième arceaux porte en outre au moins un arbre d'entraînement additionnel identique à l'arbre d'entraînement du premier et du deuxième agencements d'entraînement, monté libre en rotation sur la surface latérale du premier, respectivement du deuxième arceau, de manière à s'étendre parallèlement à l'axe de pivotement du dispositif mobile, l'arbre d'entraînement additionnel étant apte à coopérer avec les évidements d'entraînement et les évidements de blocage de l'unité de couplage du premier ou du deuxième agencement d'entraînement. Dans ce cas, le système de couplage associé à chacun des premier et deuxième arceaux peut comporter un troisième pignon solidaire en rotation de l'arbre d'entraînement additionnel correspondant et monté coaxialement en amont du dispositif de blocage correspondant, ledit troisième pignon étant apte à être entrainé en rotation simultanément au deuxième pignon par l'intermédiaire de ladite chaine de transmission.

Dans un mode de réalisation possible, l'arbre d'entraînement du premier ou du deuxième agencement d'entraînement et ledit arbre d'entraînement additionnel sont positionnés symétriquement sur la surface latérale du premier, respectivement du deuxième arceau, de manière à ce qu'il existe une unique position ou plage de positions du premier arceau et du deuxième arceau pour laquelle le doigt d'entraînement de l'arbre d'entraînement du premier ou du deuxième agencement d'entraînement d'une part, et le doigt d'entraînement de l'arbre d'entraînement additionnel d'autre part, soient engagés simultanément dans deux évidements de blocage situés à deux extrémités de la première pièce en forme d'arc.

Ladite unique position ou plage de positions comprend de préférence une position dans laquelle le plan contenant les panneaux solaires est sensiblement horizontal.

Dans un mode de réalisation possible, en dehors de ladite unique position ou plage de positions, seul un arbre d'entraînement parmi l'arbre d'entraînement du premier ou du deuxième agencement d'entraînement et ledit arbre d'entraînement additionnel peut être engagé dans l'un quelconque des évidements d'entraînement ou des évidements de blocage autres que les deux évidements de blocage situés à deux extrémités de la première pièce en forme d'arc.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[Fig.1] La [Fig.1], représente un exemple d'un arbre d'entraînement d'un agencement d'entraînement de type croix de Malte conforme à l'invention ;
[Fig.2] La [Fig.2] illustre une première vue (vue (a)) d'une unité de couplage de l'agencement d'entraînement destinée à coopérer avec l'arbre d'entraînement de la [Fig.1], ainsi qu'une vue grossie (vue (b)) d'un détail de la première vue ;
[Fig.3] La [Fig.3] illustre une deuxième vue (vue (a)) de l'unité de couplage de la [Fig.2], opposée à la première vue, ainsi qu'une vue grossie (vue (b)) d'un détail de la deuxième vue ;
[Fig.4] La [Fig.4] représente schématiquement la cinématique de l'agencement d'entraînement, sur une rotation complète (360°) de l'arbre d'entraînement de la [Fig.1] ;
[Fig.5] La [Fig.5] est une vue partielle d'un exemple de suiveur solaire utilisant des agencements d'entraînement de type croix de Malte conformes à l'invention, lorsque le suiveur solaire est dite de sécurité ;
[Fig.6] La [Fig.6] est une vue grossie d'un détail du suiveur solaire de la [Fig.5] ;
[Fig.7] La [Fig.7] représente une vue de côté du suiveur solaire des figures 5 et 6, dans une position d'inclinaison maximale, et dans un plan de coupe vertical.

### Description de mode(s) de réalisation

Dans les figures, et à moins qu'il n'en soit disposé autrement, les éléments identiques porteront les mêmes signes de référence.

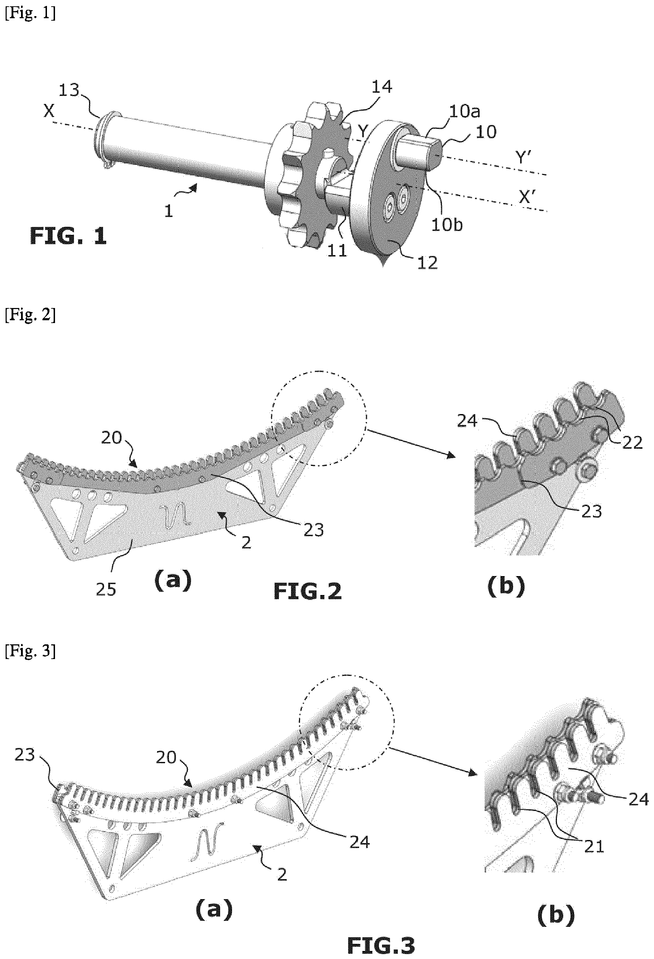

Les composantes d'un agencement d'entraînement de type croix de Malte selon un mode de réalisation possible de l'invention sont représentées sur les figures 1 à 3. L'agencement d'entraînement comprend :
- d'une part, comme visible sur la [Fig.1], un arbre d'entraînement 1 d'axe de rotation (XX'), portant à une première extrémité un doigt d'entraînement 10 et un dispositif de blocage 11 ;
- d'autre part, comme visible sur les vues (a) opposées des figures 2 et 3, une unité de couplage 2 comportant un dispositif de couplage 20 en forme d'arc portant des évidements d'entraînement 21 (voir vue (b) en grossissement de la [Fig.2]) et des évidements de blocage 22 (voir vue (b) en grossissement de la [Fig.3]) disposés alternativement dans le sens de la circonférence de la forme d'arc.

Le doigt d'entraînement 10 s'étend selon un axe (YY') parallèle à l'axe de rotation (XX'), et est décalé dans la direction radiale de l'axe de rotation (XX') et le dispositif de blocage 11 est également décalé dans la direction radiale par rapport au doigt d'entraînement 10. Le dispositif de couplage 20 en forme d'arc est positionné selon un plan perpendiculaire à l'axe de rotation (XX') de telle sorte que l'agencement d'entraînement permet classiquement une rotation relative de l'unité de couplage 2 et de l'arbre d'entraînement 1 lorsque le doigt d'entraînement 10 s'engage dans l'un des évidements d'entraînement 21, et un blocage de la rotation relative lorsque le dispositif de blocage 11 est engagé dans l'un des évidements de blocage 22. En d'autres termes, un mouvement de rotation continue de l'arbre d'entraînement 1 est transformé en une rotation relative par pas, le nombre de pas étant défini par le nombre d'évidements d'entraînement 21 dans lesquels le doigt d'entraînement 10 peut être successivement engagé.

Cependant, à la différence d'une croix de Malte classique, et conformément à l'invention, le dispositif de blocage 11 et le doigt d'entraînement 10 sont décalés dans la direction longitudinale de l'axe de rotation (XX'), et le dispositif d'entraînement 20 comporte une première pièce 23 en forme d'arc portant les évidements de blocage 22 et une deuxième pièce 24 en forme d'arc portant les évidements d'entraînement 21, la première pièce 23 et la deuxième pièce 24 en forme d'arc étant positionnées parallèlement et étant décalées dans la direction longitudinale de l'axe de rotation (XX') de manière à pouvoir coopérer avec le dispositif de blocage 11, respectivement le doigt d'entraînement 10. Les fonctions de blocage d'une part, et d'entraînement d'autre part, de l'agencement en croix de Malte selon l'invention sont ainsi avantageusement séparées, contrairement à une croix de Malte classique, ce qui permet de mieux distribuer les efforts. En outre, la première pièce 23 et la deuxième pièce 24 sont plus robustes car chacune d'entre elles porte moins d'évidements.

La première pièce 23 et/ou la deuxième pièce 24 peuvent être chacune réalisées en un seul tenant. En variante, la première pièce 23 et/ou la deuxième piève 24 peuvent consister en plusieurs portions d'arc mises bout à bout. Dans tous les cas, ces pièces sont de préférence fixées par tout moyen, par exemple par les systèmes à écrous représentés sur les figures 2 et 3, sur une partie supérieure avec un profil en arc correspondant d'une paroi 25. Les formes d'arc définies par la première pièce 23 et la deuxième pièce 25 sont centrées sur un même axe perpendiculaire aux plans les contenant, et partagent en outre le même centre de rotation, qui correspond au centre de rotation du suiveur solaire.

Dans le mode de réalisation non limitatif représenté sur les figures, le dispositif de blocage 11 est un demi-cylindre coaxial à l'arbre d'entraînement 1. Ainsi, la partie plane du demi-cylindre affleure l'axe de rotation (XX') alors que la surface demi-cylindrique s'étend radialement depuis l'axe (XX'). Le doigt d'entraînement 10 est monté sur un disque 12 lui-même fixé coaxialement à l'extrémité de l'arbre d'entraînement 1. Dans le mode de réalisation non limitatif représenté sur la [Fig.1], le doigt d'entraînement 10 est avantageusement monté libre en rotation autour de son axe (YY'), et présente une forme sensiblement cylindrique, avec deux méplats 10a, 10b diamétralement opposés. En variante non représentée, le doigt d'entraînement 10 pourrait être de forme cylindrique et monté fixe sur le disque 12.

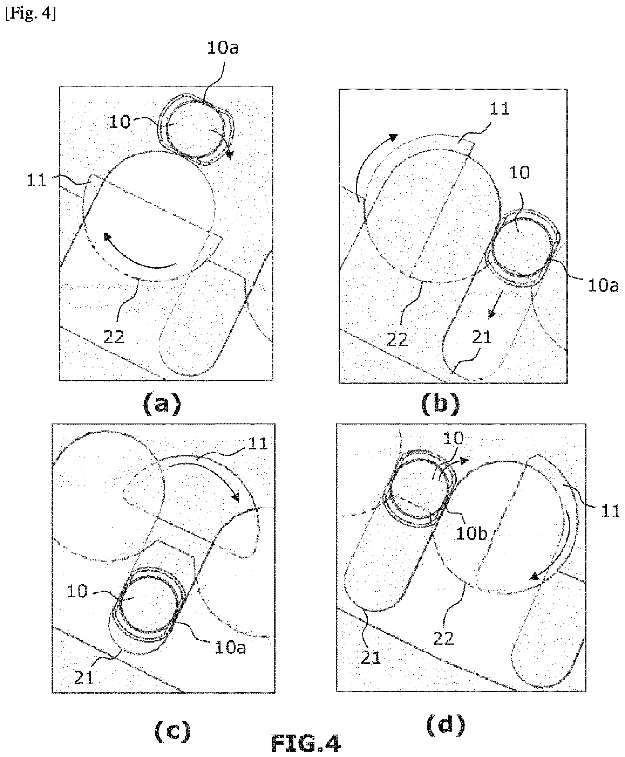

La cinématique de l'agencement d'entraînement selon l'invention lorsque l'arbre d'entraînement 1 tourne de 360 degrés autour de son axe de rotation (XX') est illustrée schématiquement sur les vues (a) à (d) de la [Fig.4]. Pour faciliter la compréhension, le disque support 12 et l'arbre d'entraînement 1 ne sont pas visibles sur ces vues. Seuls une portion des profils des pièces en forme d'arc avec leurs évidements correspondant, le dispositif de blocage 11 et le doigt d'entraînement 10 avec ses méplats ont été représentés :
- sur la vue (a), le dispositif de blocage 11 est engagé au fond d'un évidement de blocage 22, et le doigt d'entraînement 10 repose sur une partie supérieure d'une dent séparant deux évidements d'entraînement 21 successifs de la deuxième pièce en forme d'arc. Cette position correspond à une situation dans laquelle l'agencement interdit la rotation relative de l'unité de couplage 2 et de l'arbre d'entraînement malgré la rotation de l'arbre d'entraînement 1 ;
- sur la vue (b), le dispositif de blocage 11 se désengage de l'évidement de blocage 22 de la vue (a) alors que le doigt d'entraînement 10 commence à s'engager dans un évidement d'entraînement 21 ;
- sur la vue (c), le doigt d'entraînement 10 commence à se dégager de l'évidement d'entraînement 21 dans lequel il se trouvait engagé à sur la vue (b) ;
- enfin, sur la vue (d), le doigt d'entraînement s'apprête à quitter complètement l'évidement d'entraînement 21 alors que le dispositif de blocage 11 pénètre dans l'évidement de blocage 22 suivant.

La cinématique des vues (a) à (d) est reproduite tant que l'arbre d'entraînement 1 tourne, avec une phase durant laquelle un mouvement de rotation relative s'opère entre l'arbre d'entraînement 1 et l'unité de couplage 2 (vues (b) et (c) de la [Fig.4]) et une autre phase durant laquelle la rotation relative est bloquée, même si l'arbre d'entraînement 1 continue de tourner (vues (a) et (d) de la [Fig.4]).

Dans le mode de réalisation non limitatif représenté sur les figures, les pièces dentées en forme d'arc 23 et 24 portant les évidements soit de blocage 22, soit d'entraînement 21, ont ici des profils concaves pour des raisons qui apparaîtront plus clairement dans la suite. Bien entendu, un autre mode de réalisation d'un agencement d'entraînement peut également utiliser des pièces de formes convexes, sans départir du principe de l'invention.

Par ailleurs, les évidements d'entraînement 21 sont tous identiques et les évidements de blocage 22 sont également tous identiques. Les dimensions des profils en arc et des évidements d'entraînement 21 et de blocage 22 sont en outre déterminés en fonction de l'angle total de rotation que l'on souhaite avoir pour la rotation relative de l'unité de couplage 2 et de l'arbre d'entraînement 1, lorsque l'arbre d'entraînement parcourt les pièces 23 et 24 en forme d'arc sur toute leur longueur, et du pas angulaire que l'on souhaite avoir. A titre d'exemple, on peut prévoir un angle total de rotation de 110 degrés avec des pas de 1,6 degrés en prévoyant 34 évidements d'entraînement 21 successifs.

Dans un mode de réalisation particulièrement avantageux pour des raisons qui apparaîtront dans la suite, on prévoit d'avoir un nombre d'évidements de blocage 22 supérieur d'une unité au nombre d'évidements d'entraînement 21 de façon à ce que, quel que soit le sens de rotation de l'arbre d'entraînement, lorsque l'arbre d'entraînement parcourt les pièces 23 et 24 en forme d'arc sur toute leur longueur, il coopère en tout premier et en tout dernier avec un évidement de blocage 22.

Sur toutes les vues (a) à (d), et du fait que le doigt d'entraînement 10 est monté libre en rotation autour de son propre axe (YY'), au moins un des méplats opposés 10a et 10b du doigt d'entraînement et toujours en contact avec le profil en arc portant les évidements d'entraînements 21. Ceci permet avantageusement d'augmenter la surface d'appui entre le doigt d'entraînement 10 et le profil portant les évidements d'entraînement 21 par rapport à un doigt d'entraînement cylindrique et fixe, limitant ainsi les contraintes mécaniques au niveau de la pièce 24 portant les évidements d'entraînement 21. Par ailleurs, la partie supérieure des dents de la pièce 21 est de préférence en forme de demi-cercle, ce qui permet avantageusement le guidage en rotation du doigt 10 lorsque celui-ci passe de la position illustrée sur la vue (a) à la position illustrée sur la vue (b), en garantissant que le doigt 10 est dans la bonne position lors de son entrée dans l'évidement d'entraînement 21 et ne risque pas de se bloquer.

Pour l'entraînement en rotation de l'arbre d'entraînement autour de son axe (XX'), on peut prévoir un couplage direct en reliant un arbre de transmission d'un moteur d'entraînement (non représentés) en alignement sur l'extrémité 13 de l'arbre d'entraînement 1 opposée à celle portant le doigt d'entraînement 10.

En variante, comme cela sera décrit dans la suite dans une application particulière, on peut prévoir un couplage indirect avec un arbre d'entraînement d'un moteur d'entraînement (non représentés sur les figures 1 à 3), grâce à un système de couplage utilisant notamment un pignon 14 solidaire en rotation de l'arbre d'entraînement 1 et monté coaxialement en amont du dispositif de blocage 11.

L'agencement d'entraînement conforme à l'invention peut être utilisé pour de nombreuses applications. A titre d'exemple non limitatif, on peut envisager de réaliser un suiveur mobile comprenant :
- un dispositif mobile apte à pivoter autour d'un axe de pivotement et au moins un premier arceau solidaire en rotation du dispositif mobile et s'étendant dans un plan perpendiculaire à l'axe de pivotement ;
- au moins un agencement d'entraînement de type croix de Malte conforme à la présente invention, associé au premier arceau ; et
- un système motorisé d'entraînement configuré pour entraîner en rotation l'arbre d'entraînement du premier agencement d'entraînement.

L'agencement d'entraînement de type croix de Malte décrit en relation aux figures 1 à 4 peut alors être positionné de manière à ce que l'axe de rotation (XX') de l'arbre d'entraînement 1 de l'agencement d'entraînement soit colinéaire à l'axe de pivotement du dispositif mobile et à ce que l'entraînement en rotation de l'arbre d'entraînement 1 provoque soit le pivotement du premier arceau et du dispositif mobile autour dudit axe de pivotement, soit le blocage du premier arceau et du dispositif mobile, selon les positions du dispositif de blocage 11 et du doigt 10 d'entraînement relativement respectivement aux évidements de blocage 22 et aux évidements d'entraînement 1. Pour ce faire, l'agencement d'entraînement doit être positionné par rapport au premier arceau de manière à ce que le centre de rotation de la première pièce 23 et de la deuxième pièce 24 soit confondu avec celui du premier arceau.

Dans une première disposition possible, l'arbre d'entraînement 1 peut être monté sur une structure fixe et l'unité de couplage 2 peut être fixée sur un dispositif mobile destiné à pivoter autour d'un axe de pivotement, de sorte que le mouvement de rotation de l'arbre d'entraînement entraîne une rotation par pas de l'unité de couplage 2 et du dispositif mobile autour de son axe de pivotement. Par exemple, dans le cas du suiveur solaire ci-dessus, on peut prévoir un mode de réalisation dans lequel :
- le premier arceau porte l'unité de couplage 2 de l'agencement d'entraînement, la première pièce 23 en forme d'arc et la deuxième pièce 24 en forme d'arc étant fixées au premier arceau en suivant son profil, et
- l'axe de rotation (XX') de l'arbre d'entraînement 1 est fixe par rapport à une structure d'appui au sol du suiveur solaire (par exemple monté libre en rotation sur une structure d'appui) et s'étend parallèlement à l'axe de pivotement du dispositif mobile.

A l'inverse, dans une deuxième disposition possible, l'arbre d'entraînement 1 peut être monté libre en rotation sur le dispositif mobile et l'unité de couplage 2 est fixée sur la structure fixe, de sorte que le mouvement de rotation de l'arbre d'entraînement entraîne une rotation par pas du dispositif mobile autour de son axe de pivotement à chaque fois. Ainsi, dans un autre mode de réalisation du suiveur solaire, on peut prévoir d'équiper le suiveur solaire d'un premier berceau de guidage en rotation du premier arceau, fixé en partie supérieure d'un appui au sol et sur lequel repose le premier arceau, et disposer l'agencement d'entraînement de telle sorte que :
- son arbre d'entraînement 1 soit monté libre en rotation sur une surface latérale du premier arceau de manière à s'étendre parallèlement à l'axe de pivotement du dispositif mobile, et
- son unité de couplage 2 soit portée par le berceau de guidage en rotation.

Par exemple, le berceau de guidage peut comporter une paroi verticale latérale située en regard de la surface latérale du premier arceau portant l'arbre d'entraînement 1, et la première pièce 23 en forme d'arc et la deuxième pièce 24 en forme d'arc de l'unité de couplage 2 peuvent être fixées sur un profil en arc correspondant en partie supérieure de cette paroi verticale latérale.

Dans tous les cas, on peut prévoir en outre que le suiveur solaire comporte plusieurs arceaux, avec un agencement d'entraînement conforme à l'invention associé à chaque arceau. Dans ce cas, les agencements d'entraînement associés à deux arceaux consécutifs sont de préférence en miroir l'un par rapport à l'autre. En outre, le système motorisé d'entraînement est de préférence configuré pour entraîner simultanément en rotation les arbres d'entraînement des agencement d'entraînement associés aux arceaux, et comporte par exemple un unique moteur placé entre deux arceaux consécutifs, un arbre de transmission s'étendant longitudinalement selon l'axe de pivotement entre tous les arceaux, et un système de couplage associé à chaque arceau et configuré pour transmettre un mouvement de rotation de l'arbre de transmission à l'arbre d'entraînement de l'agencement d'entraînement correspondant.

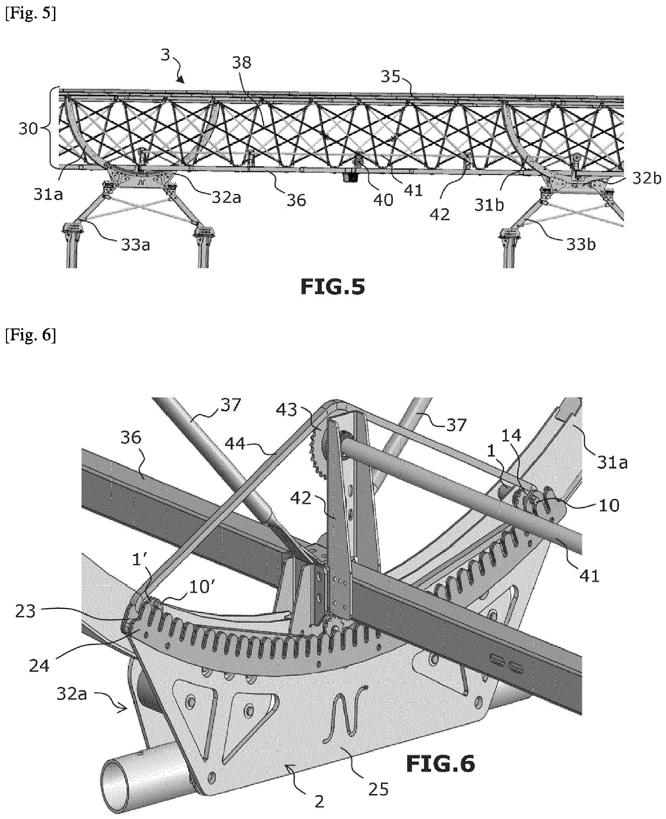

Un mode de réalisation particulièrement intéressant d'un suiveur solaire 3 utilisant des agencements d'entraînement à croix de Malte conformes à l'invention va à présent être décrit en référence aux figures 5 à 7.

Comme visible sur la [Fig.5], le suiveur solaire 3 comprend, dans cet exemple non limitatif :
- un dispositif mobile 30 apte à pivoter autour d'un axe de pivotement, un premier arceau 31a et un deuxième arceau 31b solidaires en rotation du dispositif mobile 30 et s'étendant chacun dans un plan perpendiculaire à l'axe de pivotement ;
- un premier berceau 32a de guidage en rotation du premier arceau 31a, fixé en partie supérieure d'une première structure 33a d'appui au sol et sur lequel repose le premier arceau 31a ;
- un deuxième berceau 32b de guidage en rotation du deuxième arceau 31b, fixé en partie supérieure d'une deuxième structure 33b d'appui au sol et sur lequel repose le deuxième arceau 32b ;
- un premier agencement d'entraînement de type croix de Malte conforme à l'invention, et associé au premier arceau 31a ;
- un deuxième agencement d'entraînement de type croix de Malte conforme à l'invention, associé au deuxième arceau 31a, et disposé en miroir par rapport au premier agencement d'entraînement.

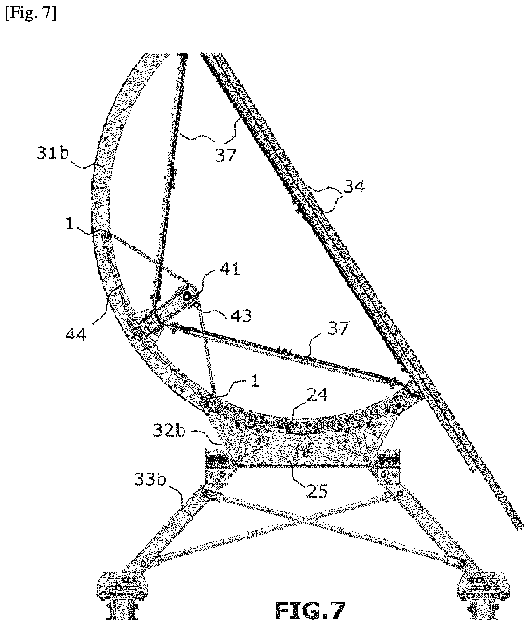

Un détail grossi au niveau du premier arceau 31 a et du premier berceau 32a de guidage est représenté sur la [Fig.6] alors que la coopération du deuxième arceau 31b et du deuxième berceau 32b de guidage est plus particulièrement visible sur la vue de côté de la [Fig.7].

Les agencements d'entraînement sont placés conformément à la deuxième disposition possible décrite ci-avant, avec leur arbre d'entraînement 1 porté par leur arceau respectif 31a ou 31b, et leur unité de couplage 2 fixée sur leur berceau de guidage respectif 32a ou 32b.On retrouve ainsi, pour chaque berceau de guidage 32a, 32b, la paroi verticale 25 du premier ou du deuxième agencement d'entraînement décrite en [Fig.2] qui correspond ici à une paroi verticale latérale du berceau de guidage correspondant, munie en partie supérieure des deux pièces 23, 24 en forme d'arc de l'unité de couplage 2 coopérant avec l'arbre d'entraînement 1 correspondant portant le doigt d'entraînement 10 et le dispositif de blocage 11 (non visible sur les figures 5 à 7).

Par ailleurs, le dispositif mobile 30 comporte ici une structure de support en treillis rigide s'étendant longitudinalement selon l'axe de pivotement (de préférence correspondant à un axe Nord/Sud sur le terrain) et sur laquelle est fixée une pluralité de panneaux solaires 34 (voir [Fig.7]) dans un même plan. La structure de support en treillis rigide est fixée uniquement aux extrémités du premier arceau 31a et du deuxième arceau 31b de sorte que les deux arceaux 31a, 31b constituent deux uniques supports pour la structure en treillis rigide.

La structure de support en treillis rigide comprend de préférence
- trois longerons s'étendant parallèlement selon l'axe de pivotement, dont deux longerons supérieurs 35 (dont un seul est visible sur la [Fig.5]), et un longeron inférieur 36 ;
- des traverses 37 réparties le long de la direction principale d'extension et reliant mécaniquement les longerons deux à deux de sorte que les traverses 37 forment une pluralité de triangles contenus chacun dans un plan perpendiculaire aux longerons (seul un de ces triangles est visible sur la [Fig.7]) ;
- des tirants 38 reliant les sommets de triangles deux à deux.

De préférence, parmi les traverses reliant les deux longerons supérieurs, les deux traverses sont placées relativement aux deux arceaux 31a, 31b de manière à en définir son diamètre.

Le suiveur solaire 3 comporte en outre un système motorisé d'entraînement configuré pour entraîner simultanément en rotation les arbres d'entraînement 1 du premier et du deuxième agencements d'entraînement, portés par leur arceau respectif 31a ou 31b. Avantageusement, ce système motorisé d'entraînement comprend un unique moteur 40 fixé à la structure de support en treillis rigide, par exemple ici au longeron inférieur 36: Le moteur 40 est placé entre le premier arceau 31a et le deuxième arceau 31b, de préférence à égale distance avec chacun des arceaux.

Le système motorisé d'entraînement comporte en outre un arbre de transmission 41 couplé au moteur et s'étendant longitudinalement selon l'axe de pivotement au moins jusqu'au premier arceau 31a et au deuxième arceau 31b. L'arbre de transmission 41 est monté libre en rotation sur la structure de support en treillis rigide, au-dessus du premier agencement d'entraînement associé au premier arceau 31a et du deuxième agencement d'entraînement au deuxième arceau 31b. Dans l'exemple, l'arbre de transmission 41 est monté libre en rotation sur le longeron inférieur 36 par l'intermédiaire de pièces de support 42 dont une extrémité inférieure est fixée au longeron inférieur 36. Une pluralité de pièces de support 42 peuvent être utilisées dans le cas d'un suiveur solaire de grande dimension pour éviter que l'arbre de transmission 41 ne subisse des flexions.

Le système motorisé d'entraînement comporte enfin un système de couplage associé à chacun des premier et deuxième arceaux et configuré pour transmettre un mouvement de rotation de l'arbre de transmission 41 simultanément aux arbres d'entraînement du premier agencement d'entraînement associé au premier arceau 31a et du deuxième agencement d'entraînement associé au deuxième arceau 31b.

Dans l'exemple non limitatif représenté sur les figures, chaque système de couplage comporte un premier pignon 43 solidaire en rotation de l'arbre de transmission 41, un deuxième pignon 14 solidaire en rotation de l'arbre d'entraînement 1 du premier ou du deuxième agencement d'entraînement et monté coaxialement en amont du dispositif de blocage 11 correspondant (conformément à la [Fig.1]), et une chaine de transmission 44 entre le premier pignon 43 et le deuxième pignon 14. En variante non représentée, chaque arbre d'entraînement peut être entraîné par des chaînes de transmission distinctes.

Par ailleurs, chacun des premier et deuxième arceaux 31a, 31b porte en outre un arbre d'entraînement additionnel 1' identique à l'arbre d'entraînement 1 du premier et du deuxième agencements d'entraînement, monté libre en rotation sur la surface latérale du premier, respectivement du deuxième arceau, de manière à s'étendre parallèlement à l'axe de pivotement du dispositif mobile 30. L'arbre d'entraînement additionnel 1' est ainsi apte à coopérer avec les évidements d'entraînement et les évidements de blocage de l'unité de couplage 2 du premier ou du deuxième agencement d'entraînement.

Chaque système de couplage comporte un troisième pignon solidaire en rotation de l'arbre d'entraînement additionnel correspondant et monté coaxialement en amont du dispositif de blocage correspondant. Le troisième pignon n'est pas visible sur les figures 5 à 7, mais correspond au premier pignon 14 de l'arbre d'entraînement 1. Ce troisième pignon est apte à être entrainé en rotation simultanément au deuxième pignon 14 par l'intermédiaire de la chaîne de transmission 44. Ainsi, le suiveur comporte, associé à chaque arceau, deux agencements de type croix de Malte conformes à l'invention, dont les arbres d'entraînement coopèrent avec la même unité de couplage 2.

Pour chacun des arceaux, l'arbre d'entraînement 1 l'arbre d'entraînement additionnel 1' sont de préférence positionnés symétriquement sur la surface latérale de l'arceau correspondant 31a ou 31b, de manière à ce qu'il existe une unique position ou plage de positions de l'arceau correspondant pour laquelle le doigt d'entraînement 10 d'une part, et le doigt d'entraînement 10' de l'arbre d'entraînement additionnel d'autre part, soient engagés simultanément dans deux évidements de blocage situés à deux extrémités de la première pièce 23 en forme d'arc. L'unique position, particulièrement visible sur les figures 5 et 6, correspond avantageusement à une position dans laquelle le plan contenant les panneaux solaires 34 est sensiblement horizontal, correspondant à un angle d'inclinaison du dispositif mobile 30 égale à 0°. On garantit ainsi avantageusement un blocage en deux points du suiveur solaire lorsque ce dernier doit être placé dans une position de sécurité face au vent. Dans le cas non représenté de la plage de positions, celle-ci comprend la position dans laquelle le plan contenant les panneaux solaires 34 est sensiblement horizontal.

En dehors de cette unique position correspondant à la position de sécurité, et quel que soit le sens de rotation du moteur 40, seul un arbre d'entraînement parmi l'arbre d'entraînement 1 du premier ou du deuxième agencement d'entraînement arbre d'entraînement additionnel 1' peut être engagé dans l'un quelconque des évidements d'entraînement ou des évidements de blocage autres que les deux évidements de blocage situés à deux extrémités de la première pièce 23 en forme d'arc. Cela peut être notamment déduit de la situation représentée sur la [Fig.7] pour laquelle le suiveur est dans une position d'inclinaison maximum sur la droite. Sur cette [Fig.7], on note que seul l'arbre d'entraînement additionnel 1' est en coopération avec le berceau de guidage 32b.

Les dimensions des pièces en forme d'arc portant les évidements de blocage et les évidements d'entraînement au niveau des deux berceaux de guidage 32a et 32b, et le nombre d'évidements d'entraînement sont de préférence adaptés pour permettre au dispositif mobile 30 de pivoter sur une plage angulaire allant par exemple de -55° à +55°, ou même au-delà. Cette plage angulaire de 110° n'est rendue possible, pour des suiveurs mobiles de grande dimension (typiquement dont les arceaux font environ 1 mètre de diamètre et sont distants d'environ 20 mètres) que grâce à l'utilisation des deux arbres d'entraînement 1 et 1'. Plus précisément, le suiveur solaire 3 peut pivoter à droite d'un angle variant par pas de 0° à +55° grâce à l'arbre d'entraînement additionnel 1' qui parcourt les pièces portant les évidements sur toute leur longueur, alors qu'il peut pivoter à gauche d'un angle variant par pas de 0° à -55° grâce à l'arbre d'entraînement 1 qui parcourt ces mêmes pièces. Dans une variante non représentée, on peut prévoir que chaque arceau porte plusieurs arbres d'entraînement additionnels 1' aptes à coopérer avec les évidements d'entraînement et les évidements de blocage de l'unité de couplage 2 du premier ou du deuxième agencement d'entraînement. Cela peut ainsi permettre de réduire la dimension des pièces 23 et 24, et/ou d'augmenter la plage angulaire de pivotement du suiveur solaire.

A noter que sur la [Fig.5], l'arbre de transmission 41 ne s'étend pas au-delà des deux arceaux 31a et 31b. En variante, on peut prévoir un arbre de transmission s'étendant au-delà des deux arceaux, éventuellement pour correspondre à la longueur du suiveur mobile 3. Dans cette variante, on peut prévoir d'autres suiveurs solaires similaires au suiveurs solaire 3 à ceci près qu'ils ne sont pas équipés du moteur 40. Il est alors possible de positionner sur une même ligne, de préférence orientée Nord/Sud, le suiveur solaire 3 doté du moteur 40 et les autres suiveurs solaires mis bout à bout en reliant deux arbres de transmission de suiveurs consécutifs. Un seul suiveur solaire 3 peut donc entraîner le pivotement synchronisé de tous les autres suiveurs solaires de la ligne.

### Références des figures

### Agencement d'entraînement :

1 arbre d'entraînement
10 doigt d'entraînement
10a, 10b méplats
11 dispositif de blocage
12 disque
13 extrémité de l'arbre d'entraînement
14 pignon
2 unité de couplage
20 dispositif de couplage
21 évidements d'entraînement
22 évidements de blocage
23 première pièce en forme d'arc
24 deuxième pièce en forme d'arc
25 paroi

### 3 suiveur solaire

30 dispositif mobile
31a premier arceau
31b deuxième arceau
32a premier berceau de guidage en rotation
32b deuxième berceau de guidage en rotation
33a première structure d'appui au sol
33b deuxième structure d'appui au sol
34 panneau solaire
35 longerons supérieurs
36 longeron inférieur
37 traverses
38 tirants

### Système motorisé d'entraînement :

40 moteur d'entraînement
41 arbre de transmission
42 pièce de support
43 premier pignon
44 chaîne de transmission

## Revendications

1. Agencement d'entraînement de type croix de Malte comprenant :
- d'une part, un arbre d'entraînement (1) selon un axe de rotation (XX'), ledit arbre d'entraînement (1) portant à une première extrémité un doigt d'entraînement (10) s'étendant parallèlement et décalé dans la direction radiale audit axe de rotation (XX') et un dispositif de blocage (11) décalé dans la direction radiale par rapport au doigt d'entraînement (10) ; et
- d'autre part, une unité de couplage (2) comportant un dispositif de couplage (20) en forme d'arc, le dispositif de couplage (20) portant des évidements d'entraînement (21) et des évidements de blocage (22) disposés alternativement dans le sens de la circonférence de la forme d'arc,
ledit agencement d'entraînement permettant une rotation relative de l'unité de couplage (2) et de l'arbre d'entraînement (1) lorsque le doigt d'entraînement (10) s'engage dans l'un des évidements d'entraînement (21), et un blocage de la rotation relative lorsque le dispositif de blocage (11) est engagé dans l'un des évidements de blocage (22),
**caractérisé en ce que** le dispositif de blocage (11) et le doigt d'entraînement (10) sont décalés dans la direction longitudinale de l'axe de rotation (XX') et **en ce que** le dispositif de couplage (20) comporte une première pièce (23) en forme d'arc portant les évidements de blocage (22) et une deuxième pièce (24) en forme d'arc portant les évidements d'entraînement (21), la première pièce (23) et la deuxième pièce (24) en forme d'arc étant positionnées parallèlement et étant décalées dans la direction longitudinale de l'axe de rotation (XX') de manière à pouvoir coopérer avec le dispositif de blocage (11), respectivement le doigt d'entraînement (10).

2. Agencement d'entraînement selon la revendication 1, dans lequel le doigt d'entraînement (10) est de forme sensiblement cylindrique, avec deux méplats (10a, 10b) diamétralement opposés, et est monté libre en rotation autour de son axe (YY').

3. Agencement d'entraînement selon l'une quelconque des revendications précédentes, dans lequel le doigt d'entraînement (10) est monté sur un disque (12) fixé coaxialement à ladite extrémité de l'arbre d'entraînement (1).

4. Agencement d'entraînement selon l'une quelconque des revendications précédentes, dans lequel le dispositif de blocage (11) est un demi-cylindre coaxial à l'arbre d'entraînement (1).

5. Suiveur solaire (3) comprenant :
- un dispositif mobile (30) apte à pivoter autour d'un axe de pivotement et au moins un premier arceau (31a) solidaire en rotation du dispositif mobile (30) et s'étendant dans un plan perpendiculaire à l'axe de pivotement ;
- un premier agencement d'entraînement de type croix de Malte selon l'une quelconque des revendications 1 à 4, associé au premier arceau (31a) et positionné de manière à ce que l'axe de rotation de l'arbre d'entraînement (1) du premier agencement d'entraînement soit colinéaire à l'axe de pivotement du dispositif mobile (30) et à ce que l'entraînement en rotation de l'arbre d'entraînement (1) provoque soit le pivotement du premier arceau (31a) et du dispositif mobile (30) autour dudit axe de pivotement, soit le blocage du premier arceau (31a) et du dispositif mobile (30), selon les positions du dispositif de blocage (11) et du doigt (10) d'entraînement relativement respectivement aux évidements de blocage (22) et aux évidements d'entraînement (21) ; et
- un système motorisé d'entraînement configuré pour entraîner en rotation l'arbre d'entraînement (1) du premier agencement d'entraînement.

6. Suiveur solaire (3) selon la revendication 5, comportant :
- un deuxième arceau (31b) situé dans un plan parallèle au premier arceau (31a) et solidaire en rotation du dispositif mobile (30) ; et
- un deuxième agencement d'entraînement selon l'une quelconque des revendications 1 à 4, associé au deuxième arceau (31b).

7. Suiveur solaire (3) selon la revendication 6, dans lequel ledit système motorisé d'entraînement est configuré pour entraîner simultanément en rotation les arbres d'entraînement du premier agencement d'entraînement associé au premier arceau (31a) et du deuxième agencement d'entraînement associé au deuxième arceau (31b).

8. Suiveur solaire selon la revendication 7, dans lequel le système motorisé d'entraînement comprend :
- un unique moteur (40) placé entre le premier arceau (31a) et le deuxième arceau (31b) ;
- un arbre de transmission (41) couplé au moteur et s'étendant longitudinalement selon l'axe de pivotement au moins jusqu'au premier arceau (31a) et au deuxième arceau (31b) ; et
- un système de couplage associé à chacun des premier et deuxième arceaux et configuré pour transmettre un mouvement de rotation de l'arbre de transmission simultanément aux arbres d'entraînement du premier agencement d'entraînement associé au premier arceau (31a) et du deuxième agencement d'entraînement associé au deuxième arceau (31b).

9. Suiveur solaire selon l'une quelconque des revendications 5 à 8, dans lequel :
- le premier arceau porte l'unité de couplage du premier agencement d'entraînement, la première pièce en forme d'arc et la deuxième pièce en forme d'arc étant fixées audit premier arceau en suivant le profil du premier arceau, et
- l'axe de rotation de l'arbre d'entraînement du premier agencement d'entraînement est fixe par rapport à une structure d'appui au sol du suiveur solaire et s'étend parallèlement à l'axe de pivotement du dispositif mobile.

10. Suiveur solaire (3) selon l'une quelconque des revendications 5 à 8, comportant en outre un premier berceau (32a) de guidage en rotation du premier arceau (31a), fixé en partie supérieure d'une première structure d'appui (33a) au sol et sur lequel repose le premier arceau (31a), et dans lequel :
- l'arbre d'entraînement (1) du premier agencement d'entraînement est monté libre en rotation sur une surface latérale du premier arceau (31a) de manière à s'étendre parallèlement à l'axe de pivotement du dispositif mobile (30), et
- l'unité de couplage (2) du premier agencement d'entraînement est portée par le premier berceau (32a) de guidage en rotation.

11. Suiveur solaire (3) selon la revendication 10, dans lequel le premier berceau (32a) de guidage en rotation comprend une paroi verticale latérale (25) située en regard de la surface latérale du premier arceau (31a), la première pièce (23) en forme d'arc et la deuxième pièce (22) en forme d'arc de l'unité de couplage (2) étant fixées sur un profil en arc correspondant en partie supérieure de la paroi verticale latérale (25).

12. Suiveur solaire (3) selon les revendications 8 et 10, comportant :
- un deuxième berceau (32b) de guidage en rotation du deuxième arceau (31b), fixé en partie supérieure d'une deuxième structure d'appui (33b) au sol et sur lequel repose le deuxième arceau (31b).

13. Suiveur solaire (3) selon la revendication 12, dans lequel le dispositif mobile (30) comporte une structure de support en treillis rigide s'étendant longitudinalement selon l'axe de pivotement et sur laquelle est fixée une pluralité de panneaux solaires (34) dans un même plan, la structure de support en treillis rigide étant fixée uniquement aux extrémités du premier arceau (31a) et du deuxième arceau (31b) de sorte que lesdits premier et deuxième arceaux constituent deux uniques supports pour ladite structure en treillis rigide.

14. Suiveur solaire (3) selon la revendication 13, dans lequel :
- l'unique moteur (40) est fixé à la structure de support en treillis rigide,
- l'arbre de transmission (41) est monté libre en rotation sur la structure de support en treillis rigide, au-dessus du premier agencement d'entraînement associé au premier arceau (31a) et du deuxième agencement d'entraînement au deuxième arceau (31b) ; et
- le système de couplage associé à chacun des premier et deuxième arceaux comporte un premier pignon (43) solidaire en rotation de l'arbre de transmission (41), un deuxième pignon (14) solidaire en rotation de l'arbre d'entraînement (1) du premier ou du deuxième agencement d'entraînement et monté coaxialement en amont du dispositif de blocage (11) correspondant, et une chaine de transmission (44) entre le premier pignon (43) et le deuxième pignon (14).

15. Suiveur solaire (3) selon l'une quelconque des revendications 12 à 14, dans lequel chacun des premier et deuxième arceaux (31a, 31b) porte en outre au moins un arbre d'entraînement additionnel (1') identique à l'arbre d'entraînement (1) du premier et du deuxième agencements d'entraînement, monté libre en rotation sur la surface latérale du premier, respectivement du deuxième arceau, de manière à s'étendre parallèlement à l'axe de pivotement du dispositif mobile (30), l'arbre d'entraînement additionnel (1') étant apte à coopérer avec les évidements d'entraînement (21) et les évidements de blocage (22) de l'unité de couplage (2) du premier ou du deuxième agencement d'entraînement.

16. Suiveur solaire (3) selon la revendication 15, dans lequel le système de couplage associé à chacun des premier et deuxième arceaux (31a, 3b) comporte un troisième pignon solidaire en rotation de l'arbre d'entraînement additionnel (1') correspondant et monté coaxialement en amont du dispositif de blocage correspondant, ledit troisième pignon étant apte à être entrainé en rotation simultanément au deuxième pignon (14) par l'intermédiaire de ladite chaine de transmission (44).

17. Suiveur solaire selon l'une quelconque des revendications 15 ou 16, dans lequel l'arbre d'entraînement (1) du premier ou du deuxième agencement d'entraînement et ledit arbre d'entraînement additionnel (1') sont positionnés symétriquement sur la surface latérale du premier, respectivement du deuxième arceau (31a, 31b), de manière à ce qu'il existe une unique position ou plage de positions du premier arceau (31a) et du deuxième arceau (31b) pour laquelle le doigt d'entraînement (10) de l'arbre d'entraînement du premier ou du deuxième agencement d'entraînement d'une part, et le doigt d'entraînement (10') de l'arbre d'entraînement additionnel d'autre part, soient engagés simultanément dans deux évidements de blocage situés à deux extrémités de la première pièce (23) en forme d'arc.

18. Suiveur solaire selon la revendication 18, dans laquelle ladite unique position ou plage de positions comprend une position dans laquelle le plan contenant les panneaux solaires (34) est sensiblement horizontal.

19. Suiveur solaire selon l'une quelconque des revendications 17 et 18, dans lequel, en dehors de ladite unique position ou plage de positions, seul un arbre d'entraînement parmi l'arbre d'entraînement (1) du premier ou du deuxième agencements d'entraînement et ledit arbre d'entraînement additionnel (1') peut être engagé dans l'un quelconque des évidements d'entraînement ou des évidements de blocage autres que les deux évidements de blocage situés à deux extrémités de la première pièce (23) en forme d'arc.
